(19) Europäisches Patentamt
European Patent Office
Office européen des brevets

(11) EP 2 385 086 A1

(12) **EUROPÄISCHE PATENTANMELDUNG**

(43) Veröffentlichungstag:
**09.11.2011 Patentblatt 2011/45**

(51) Int Cl.:
***C09D 183/06*** *(2006.01)*

(21) Anmeldenummer: **11164494.4**

(22) Anmeldetag: **02.05.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **06.05.2010 DE 102010028661**
**06.05.2010 US 331877 P**

(71) Anmelder:
- **Carl Zeiss Vision GmbH**
  **73430 Aalen (DE)**
- **Carl Zeiss Vision Australia Holdings Ltd.**
  **Londsdale, SA 5160 (AU)**

(72) Erfinder:
- **Hugenberg, Norbert**
  **73434 Aalen (DE)**
- **Peng, Bin**
  **73434, Aalen (DE)**
- **Diggins, David**
  **Flagstaff Hill, South Australia 5159 (AU)**
- **Petereit, Anja**
  **73453, Abtsgmünd (DE)**
- **Puetz, Joerg**
  **73431, Aalen (DE)**

(74) Vertreter: **Haggenmüller, Christian**
**Maiwald Patentanwalts GmbH**
**Elisenhof**
**Elisenstraße 3**
**80335 München (DE)**

(54) **Zusammensetzung für die Herstellung einer kratzfesten Beschichtung mit verbesserter Laugenbeständigkeit**

(57) Die vorliegende Erfindung betrifft eine Zusammensetzung für die Herstellung einer Beschichtung, umfassend
(a) ein Silanderivat der Formel (I)

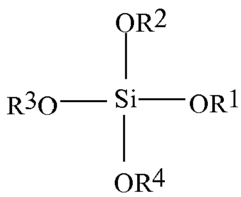

(I)

worin
$R^1$, $R^2$, $R^3$ und $R^4$, die gleich oder unterschiedlich sein können, ausgewählt werden aus Alkyl, Acyl, Alkylenacyl, Cycloalkyl, Aryl oder Alkylenaryl, die gegebenenfalls substituiert sein können,
und/oder ein Hydrolyse- und/oder Kondensationsprodukt des Silanderivats der Formel (I),
(b) ein Silanderivat der Formel (II)

$$R^6R^7_{3-n}Si(OR^5)_n \qquad (II)$$

worin
$R^5$ eine unsubstituierte oder substituierte Alkyl-, Acyl-, Alkylenacyl-, Cycloalkyl-, Aryl- oder Alkylenarylgruppe ist,
$R^6$ ein organischer Rest ist, der eine Epoxidgruppe enthält,
$R^7$ eine unsubstituierte oder substituierte Alkyl-, Cycloalkyl-, Aryl- oder Alkylenarylgruppe ist,
n 2 oder 3 ist,

EP 2 385 086 A1

und/oder ein Hydrolyse- und/oder Kondensationsprodukt des Silanderivats der Formel (II),
(c) ein kolloidales anorganisches Oxid, Fluorid oder Oxyfluorid,
(d) eine cycloaliphatische oder aromatische Epoxidverbindung, die mindestens zwei Epoxidgruppen aufweist,
(e) ein Lösungsmittel, das einen Alkohol, Ether und/oder Ester enthält.

## Beschreibung

Im Bereich der Optik und Optoelektronik werden zunehmend transparente Polymere verwendet, da diese Materialien hinsichtlich Bruchsicherheit und Gewichtsersparnis Vorteile bieten. Auch lassen sich im Bereich der Präzisionsoptik Bauteile mit komplexerer dreidimensionaler Geometrie wie Objektive oder Linsen relativ einfach in großer Stückzahl herstellen.

Beispielhafte Kunststoffmaterialien, die derzeit im Bereich der Optik Anwendung finden, sind Polymethylmethacrylat, Polycarbonat, Diethylenglycolbisallylcarbonat (Handelsname CR39®) oder auch spezielle hochbrechende Polymere auf Polythiourethanbasis.

Ein Nachteil dieser Kunststoffmaterialien ist deren relativ geringe Oberflächenhärte und Kratzfestigkeit.

Ein bekannter Ansatz zur Verbesserung der Kratzfestigkeit besteht in dem Aufbringen einer Oberflächenbeschichtung über einen Sol-Gel-Prozess. Dabei werden z.B. Tetraalkoxysilane eingesetzt, die unter geeigneten Bedingungen hydrolysieren und anschließend durch Kondensation der durch die Hydrolyse entstandenen Silanolgruppen zu einer dreidimensional vernetzten Silikatstruktur führen.

Zusätzlich zu einer möglichst hohen Kratzfestigkeit sollte die Oberflächenbeschichtung auch eine Reihe weiterer Anforderungen genügen. Die Beschichtung sollte unter anderem eine möglichst geringe Neigung zur Rissbildung unter thermischer Beanspruchung, eine möglichst gute Haftung auf der Substratoberfläche sowie eine möglichst hohe Beständigkeit gegenüber Laugen und/oder Säuren aufweisen. Weiterhin sollte sich die Brechzahl der Schicht möglichst gut an die Brechzahl des Substrats anpassen lassen.

Bei der Verwirklichung dieses Anforderungsprofils ist allerdings zu berücksichtigen, dass sich diese Eigenschaften häufig gegenläufig verhalten und die Verbesserung einer dieser Eigenschaften daher nur auf Kosten einer anderen Eigenschaft erzielt werden kann.

Um die Flexibilität des Silikatnetzwerkes zu erhöhen und dadurch die Neigung zur Rissbildung bei thermischer Beanspruchung zu verringern, ist es beispielsweise üblich, die Tetraalkoxysilane in Kombination mit Organoalkoxysilanen (d.h. Silane, die außer Alkoxygruppen auch einen oder mehrere direkt an Si-Atom gebundene organische Reste aufweisen) einzusetzen. Die dadurch erhaltene organischanorganische Netzwerkstruktur weist zwar eine höhere Flexibilität und Basenstabilität auf, allerdings auf Kosten einer gegenüber dem rein anorganischen Silikatnetzwerk geringen Härte.

US 3,986,997 beschreibt eine wässrige Zusammensetzung, die kolloidales $SiO_2$ sowie ein Organotrialkoxysilan wie z.B. Methyltrimethoxysilan und/oder Hydrolyse-und/oder Kondensationsprodukte dieses Organotrialkoxysilans enthält.

Weiterhin ist es aus dem Stand der Technik auch bekannt, Tetraalkoxysilan bzw. kolloidales $SiO_2$ sowie ein Organoalkoxysilan, dessen organischer Rest eine Epoxidgruppe enthält, zusammen mit einer Dicarbonsäure oder einem Dicarbonsäureanhydrid einzusetzen.

So offenbart US 2001/0049023 Al eine Zusammensetzung für die Beschichtung eines Substrats auf der Basis eines wässrig-organischen Lösungsmittelgemisches, das (i) ein Organoalkoxysilan mit Epoxidfunktionalität oder dessen Hydrolyse- und/oder Kondensationsprodukte, (ii) ein Tetraalkoxysilan oder dessen Hydrolyse- und/oder Kondensationsprodukte und (iii) eine Dicarbonsäure oder ein Dicarbonsäureanhydrid enthält.

Die Verwendung von Tetraalkoxysilan bzw. kolloidalem $SiO_2$ sowie einem Organoalkoxysilan, dessen organischer Rest eine Epoxidgruppe enthält, in Kombination mit einer Dicarbonsäure oder einem Dicarbonsäureanhydrid wird auch in der US 4,355,135 und der US 5,322,888 diskutiert.

WO 2008/087741 offenbart eine Beschichtungszusammensetzung, die (A) eine Poly(methyl)glycidyletherverbindung mit einem aliphatischen Rest R1, (B) ein Silsesquioxan, (C) eine Alkoxyverbindung, (D) eine Organoalkoxyverbindung, wobei der an das Si-Atom gebundene organische Rest eine kationisch polymerisierbare Gruppe wie z.B. eine Epoxidgruppe aufweist, und (E) einen Photopolymerisationskatalysator enthält. Hinsichtlich geeigneter multifunktionaler Epoxidverbindungen als Komponente (A) wird in der WO 2008/087741 ausgeführt, dass cyclische Epoxidverbindungen, d.h. cycloaliphatische und aromatische Epoxidverbindungen, für die Herstellung ausreichend harter Beschichtungen nicht geeignet sind.

Unter Berücksichtigung der obigen Ausführungen besteht eine Aufgabe der vorliegenden Erfindung darin, eine Zusammensetzung bereit zu stellen, aus der sich eine Beschichtung herstellen lässt, die einen verbesserten Kompromiss hinsichtlich hoher Kratzbeständigkeit bei gleichzeitig geringer Neigung zur Rissbildung unter thermischer Beanspruchung, guter Haftung auf der Substratoberfläche sowie hoher Beständigkeit gegenüber Laugen und/oder Säuren aufweist.

Gelöst wird diese Aufgabe durch die Bereitstellung einer Zusammensetzung für die Herstellung einer Beschichtung, umfassend

(a) ein Silanderivat der Formel (I)

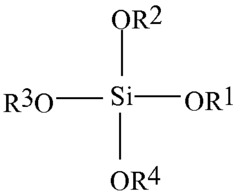

(I)

worin

$R^1$, $R^2$, $R^3$ und $R^4$, die gleich oder unterschiedlich sein können, ausgewählt werden aus Alkyl, Acyl, Alkylenacyl, Cycloalkyl, Aryl oder Alkylenaryl, die gegebenenfalls substituiert sein können,

und/oder ein Hydrolyse- und/oder Kondensationsprodukt des Silanderivats (I),
(b) ein Silanderivat der Formel (II)

$$R^6R^7_{3-n}Si(OR^5)_n \qquad (II)$$

worin

- $R^5$ eine unsubstituierte oder substituierte Alkyl-, Acyl-, Alkylenacyl-, Cycloalkyl-, Aryl- oder Alkylenarylgruppe ist,
- $R^6$ ein organischer Rest ist, der eine Epoxidgruppe enthält,
- $R^7$ eine unsubstituierte oder substituierte Alkyl-, Cycloalkyl-, Aryl- oder Alkylenarylgruppe ist,
- n 2 oder 3 ist,

und/oder ein Hydrolyse- und/oder Kondensationsprodukt des Silanderivats (II),
(c) ein kolloidales anorganisches Oxid, Fluorid oder Oxyfluorid,
(d) eine cycloaliphatische oder aromatische Epoxidverbindung, die mindestens zwei Epoxidgruppen aufweist,
(e) ein Lösungsmittel, das einen Alkohol, Ether und/oder Ester enthält.

Wie nachfolgend noch eingehender erörtert werden wird, ermöglicht die Verwendung einer Zusammensetzung, die die Komponenten (a) bis (e) enthält, die Herstellung einer Beschichtung, die sich sowohl durch hohe Kratzfestigkeit als auch durch hohe Laugenbeständigkeit und gute Haftfestigkeit sowie verringerte Neigung zur Rissbildung auf dem Substrat auszeichnet.

Wie oben bereits angegeben, enthält die erfindungsgemäße Zusammensetzung als Komponente (a) ein Silanderivat der Formel (I) und/oder ein Hydrolyse- und/oder Kondensationsprodukt des Silanderivats der Formel (I).

Durch den Begriff "Hydrolyse- und/oder Kondensationsprodukt des Silanderivats der Formel (I)" wird zum Ausdruck gebracht, dass es im Rahmen der vorliegenden Erfindung auch möglich ist, dass das Silanderivat (I) zumindest teilweise unter Ausbildung von Silanolgruppen bereits hydrolysiert wurde und außerdem durch Kondensationsreaktion dieser Silanolgruppen bereits eine gewisse Vernetzung stattgefunden hat.

Wenn $R^1$, $R^2$, $R^3$ und/oder $R^4$ eine Alkylgruppe ist/sind, handelt es sich bevorzugt um eine $C_{1-8}$-Alkylgruppe, bevorzugter eine $C_{1-4}$-Alkylgruppe, die gegebenenfalls noch substituiert sein kann. Beispielhaft können in diesem Zusammenhang Methyl, Ethyl, *n*-Propyl, *iso*-Propyl, *n*-Butyl, *iso*-Butyl, *tert.*-Butyl, Hexyl oder auch Octyl genannt werden.

Wenn $R^1$, $R^2$, $R^3$ und/oder $R^4$ eine Acylgruppe ist/sind, so handelt es sich bevorzugt um Acetyl, Propionyl oder Butyryl.

Wenn $R^1$, $R^2$, $R^3$ und/oder $R^4$ eine Alkylenacylgruppe ist/sind, handelt es sich bevorzugt um eine $C_{1-6}$-Alkylen-Acylgruppe (z.B. $-CH_2$-Acyl; $-CH_2-CH_2$-Acyl; etc.) wobei die Acyleinheit bevorzugt Acetyl, Propionyl oder Butyryl ist.

Unter einer Alkylen-Gruppe wird eine zweiwertige Alkylgruppe verstanden (also z.B. $-CH_2-$; $-CH_2-CH_2-$; etc.).

Wenn $R^1$, $R^2$, $R^3$ und/oder $R^4$ eine Cycloalkylgruppe ist/sind, handelt es sich bevorzugt um einen Cyclohexyl-Rest, der gegebenenfalls substituiert sein kann.

Wenn $R^1$, $R^2$, $R^3$ und/oder $R^4$ eine Arylgruppe ist/sind, handelt es sich bevorzugt um einen Phenylrest, der gegebenenfalls substituiert sein kann.

Wenn $R^1$, $R^2$, $R^3$ und/oder $R^4$ eine Alkylenarylgruppe ist/sind, handelt es sich bevorzugt um einen $C_{1-6}$-Alkylen-Arylrest (z.B. $-CH_2$-Aryl; $-CH_2-CH_2$-Aryl; etc.), wobei die Aryleinheit bevorzugt Phenyl ist, das gegebenenfalls substituiert sein kann.

Bevorzugte Silanderivate der Formel (I) sind z.B. Tetramethoxysilan, Tetraethoxysilan, Tetrapropoxysilan, Tetraisopropoxysilan, Tetrabutoxysilan, Tetraisobutoxysilan, Tetrakis(methoxyethoxy)silan, Tetrakis(methoxypropoxy)silan, Tetrakis(ethoxyethoxy)silan, Tetrakis(methoxyethoxyethoxy)silan, Trimethoxyethoxysilan, Dimethoxydiethoxysilan und entsprechende Derivate.

Diese Silanderivate der Formel (I) sind dem Fachmann allgemein bekannt und sind kommerziell erhältlich und/ oder durch dem Fachmann bekannte Standardverfahren herstellbar.

Bevorzugt liegen die Silanderivate der Formel (I) und/oder die Hydrolyse- und/oder Kondensationsprodukte der Silanderivate der Formel (I) in der Zusammensetzung in einer Menge von 1 Gew% bis 35 Gew%, bevorzugter von 5 Gew% bis 20 Gew% vor.

Wie oben bereits angegeben, enthält die erfindungsgemäße Zusammensetzung als Komponente (b) ein Silanderivat der Formel (II) und/oder ein Hydrolyse- und/oder Kondensationsprodukt des Silanderivats der Formel (II).

Durch den Begriff "Hydrolyse- und/oder Kondensationsprodukt des Silanderivats (II)" wird wiederum zum Ausdruck gebracht, dass es im Rahmen der vorliegenden Erfindung auch möglich ist, dass das Silanderivat (II) zumindest teilweise unter Ausbildung von Silanolgruppen bereits hydrolysiert wurde und außerdem durch Kondensationsreaktion dieser Silanolgruppen bereits eine gewisse Vernetzung stattgefunden hat.

Bezüglich der bevorzugten Alkyl-, Acyl-, Alkylenacyl-, Cycloalkyl-, Aryl- oder Alkylenarylgruppen des Restes $R^5$ kann auf die oben gemachten Ausführungen für die Reste $R^1$, $R^2$, $R^3$ und $R^4$ verwiesen werden.

In einer bevorzugten Ausführungsform weist der eine Epoxidgruppe enthaltende organische Rest $R^6$ 2 bis 14 C-Atomen auf.

Bevorzugt liegt die Epoxidgruppe in dem Rest $R^6$ in Form einer Glycidoxy-Gruppe vor, die bevorzugt über eine $C_{1-10}$-Alkylengruppe, bevorzugter über eine $C_{1-4}$-Alkylengruppe, z.B. Ethylen, Propylen oder Butylen, eine Arylengruppe, z.B. Phenylen, oder eine Alkylenethergruppe mit dem Siliziumatom verbunden ist.

In einer bevorzugten Ausführungsform weist der Rest $R^6$ folgende Formel (III) auf:

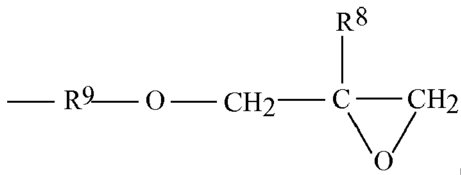

(III)

worin

$R^8$ Wasserstoff oder $C_{1-4}$-Alkyl, bevorzugt Wasserstoff, ist und
$R^9$ eine unsubstituierte oder substituierte $C_{1-10}$-Alkylen-Crruppe, bevorzugter eine unsubstituierte oder substituierte $C_{1-4}$-Alkylen-Crruppe ist.

Wie bereits oben angemerkt, wird unter einer Alkylen-Gruppe eine zweiwertige Alkyl-Gruppe verstanden (also z.B. —$CH_2$-; -$CH_2$-$CH_2$-; etc.).

Bezüglich der bevorzugten Alkyl-, Cycloalkyl-, Aryl- oder Alkylenarylgruppen für den Rest $R^7$ kann auf die oben für $R^1$, $R^2$, $R^3$ und $R^4$ gemachten Ausführungen verwiesen werden.

Bevorzugte Silanderivate der Formel (II) sind z.B. 3-Glycidoxymethyltrimethoxysilan, 3-Glycidoxypropyltrihydroxysilan, 3-Glycidoxypropyldimethylhydroxysilan, 3-Glycidoxypropyldimethylethoxysilan, 3-Glycidoxypropylmethyldiethoxysilan, 3-Glycidoxypropyltrimethoxysilan, 3-Glycidoxypropyltriethoxysilan, 3-Glycidoxypropyldimethoxymethylsilan, 3-Glycidoxypropyldiethoxymethylsilan, 2-(3,4-epoxycyclohexyl)ethyltrimethoxysilan, und entsprechende Derivate.

Diese Silanderivate der Formel (II) sind dem Fachmann allgemein bekannt und sind kommerziell erhältlich und/oder durch dem Fachmann bekannte Standardverfahren herstellbar.

Bevorzugt liegt/liegen das Silanderivat der Formel (II) und/oder die Hydrolyse-und/oder Kondensationsprodukte des Silanderivats (II) in der Zusammensetzung in einer Menge von 1 Gew% bis 35 Gew%, bevorzugter von 5 Gew% bis 20 Gew% vor.

Das Gewichtsverhältnis des Silanderivats (I) oder dessen Hydrolyse- und/oder Kondensationsprodukte zu dem Silanderivat (II) kann grundsätzlich über einen breiten Bereich variiert werden.

Bevorzugt liegt das Gewichtsverhältnis des Silanderivats (I) und/oder dessen Hydrolyse- und/oder Kondensationsprodukte zu dem Silanderivat (II) und/oder dessen Hydrolyse- und/oder Kondensationsprodukte im Bereich von 95/5 bis 5/95, bevorzugter im Bereich von 70/30 bis 30/70, noch bevorzugter im Bereich von 60/40 bis 40/60.

Wie bereits oben angegeben, enthält die erfindungsgemäße Zusammensetzung als Komponente (c) ein kolloidales anorganisches Oxid, Fluorid oder Oxyfluorid oder ein Gemisch dieser.

Das kolloidale anorganische Oxid, Fluorid oder Oxyfluorid trägt durch Einbau in das bestehende Netzwerk zur

Erhöhung der Kratzfestigkeit bei. Weiterhin kann durch Auswahl geeigneter Oxide, Fluoride oder Oxyfluoride die Brechzahl der Beschichtung der Brechzahl des Substrats angepasst werden.

In einer bevorzugten Ausführungsform wird das anorganische Oxid aus $SiO_2$, $TiO_2$, $ZrO_2$, $SnO_2$, $Sb_2O_3$, $Al_2O_3$, AlO(OH) oder Mischoxiden oder Gemischen oder Core-Shell-Strukturen davon ausgewählt. Als Fluorid kann beispielsweise $MgF_2$ als reine Komponente oder in Core-Shell-Struktur mit einem der oben genannten Oxide eingesetzt werden.

Der mittlere Partikeldurchmesser der anorganischen Komponente sollte bevorzugt so gewählt sein, dass die Transparenz der Beschichtung nicht beeinflusst wird. In einer bevorzugten Ausführungsform weist die kolloidale anorganische Komponente einen mittleren Partikeldurchmesser im Bereich von 2 nm bis 150 nm, noch bevorzugter von 2 nm bis 70 nm auf. Der mittlere Partikeldurchmesser wird über dynamische Lichtstreuung gemessen.

Bevorzugt liegt die kolloidale anorganische Komponente in einer Menge von 1 Gew% bis 40 Gew%, noch bevorzugter von 5 Gew% bis 25 Gew%, bezogen auf das Gesamtgewicht der Zusammensetzung, vor.

Wie oben bereits angegeben, enthält die erfindungsgemäße Zusammensetzung als Komponente (d) eine cycloaliphatische oder aromatische Epoxidverbindung, die mindestens zwei Epoxidgruppen aufweist.

Hier kann es sich zum Beispiel auch um ein Präpolymer mit 2 oder mehr Epoxyfunktionalitäten handeln.

Im Rahmen der vorliegenden Erfindung ist es also wesentlich, dass die Epoxidverbindung der Komponente (d) eine cyclische Gruppe aufweist, entweder in Form einer cycloaliphatischen oder einer aromatischen Einheit.

Wie nachfolgend noch diskutiert wird, führt die Verwendung einer cycloaliphatischen oder aromatischen Epoxidverbindung im Vergleich zu einer nicht-cyclischen Epoxidverbindung zu einem verbesserten Kompromiss zwischen Kratzfestigkeit, Laugenbeständigkeit und Haftfestigkeit auf dem Substrat.

Bevorzugt handelt es sich bei der cycloaliphatische Verbindung um ein substituiertes Cyclohexan oder substituiertes Cyclopentan, das mindestens zwei Substituenten mit jeweils mindestens einer Epoxidgruppe aufweist, oder ein Gemisch dieser Epoxidverbindungen, oder ein Präpolymer dieser Verbindung.

Bevorzugt handelt es sich bei der aromatischen Verbindung um ein substituiertes Benzol, substituiertes Diphenylmethanderivat oder substituiertes Bisphenol, das mindestens zwei Substituenten mit jeweils mindestens einer Epoxidgruppe aufweist, oder ein Gemisch dieser Epoxidverbindungen, oder ein Präpolymer dieser Verbindung.

Bevorzugt weist die cycloaliphatische oder aromatische Epoxidverbindung mindestens zwei Substituenten auf, die gleich oder unterschiedlich sein können, und durch folgende Formel dargestellt werden:

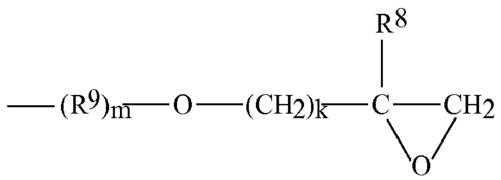

worin

> $R^8$ die bereits oben angegebene Bedeutung (d.h. Wasserstoff oder $C_{1-4}$-Alkyl) und $R^9$ die bereits oben angegebene Bedeutung (d.h. $C_{1-10}$-Alkylen, bevorzugter $C_{1-4}$-Alkylen)
> aufweisen,
> k 1-4, bevorzugter 1-2 ist,
> und m 0 oder 1 ist.

Als bevorzugte cycloaliphatische oder aromatische Epoxidverbindungen, die mindestens zwei Epoxidgruppen aufweisen, können z.B. Resorcinolbisglycidylether und Cyclohexandimethanolbisglycidylether, oder deren Gemische genannt werden.

Bevorzugt liegt die mindestens zwei Epoxidgruppen aufweisende cycloaliphatische oder aromatische Verbindung in einer Menge von 0,1 Gew% bis 20 Gew%, bevorzugter von 0,5 Gew% bis 10 Gew%, bezogen auf das Gesamtgewicht der Zusammensetzung, vor.

Wie bereits oben angegeben, umfasst die erfindungsgemäße Zusammensetzung als Komponente (e) ein Lösungsmittel, das einen Alkohol, Ether und/oder Ester enthält.

Enthält das Lösungsmittel einen Alkohol, wird dieser bevorzugt aus einem Alkanol, Cycloalkanol, Arylalkohol, Alkylenglycol, Monoalkylether von Polyoxyalkylenglycolen oder Monoalkylether von Alkylenglycolen oder deren Gemischen ausgewählt.

In einer bevorzugten Ausführungsform wird der Alkohol aus einem $C_{1-6}$-Alkanol, bevorzugter einem $C_{1-4}$-Alkanol, einem Mono-$C_{1-4}$-Alkylether eines $C_{2-4}$-Alkylenglycols, oder einem Gemisch davon ausgewählt.

Enthält das Lösungsmittel einen Ether, wird dieser bevorzugt aus einem Dialkylether, einem cycloaliphatischen

Ether, einem Arylether oder Alkylarylether oder deren Gemischen ausgewählt.

Enthält das Lösungsmittel einen Ester, wird dieser bevorzugt aus einem Alkylester, Cycloalkylester, Arylalkylester, Alkylenglycolester oder deren Gemischen ausgewählt.

Hinsichtlich der Homogenität und optischen Qualität der aus der Zusammensetzung hergestellten Beschichtung kann es vorteilhaft sein, wenn das Lösungsmittel zwei Alkohole, Ether oder Ester mit unterschiedlichem Siedepunkt enthält.

Bevorzugt enthält das Lösungsmittel einen ersten Alkohol, Ether oder Ester mit einem Siedepunkt S1 und einen zweiten Alkohol, Ether oder Ester mit einem Siedepunkt S2, wobei sich der Siedepunkt S1 und der Siedepunkt S2 so unterscheiden, dass entweder

$$S1/S2 \geq 1{,}2$$

oder

$$S1/S2 \leq 0{,}8$$

Bevorzugt enthält das Lösungsmittel ein $C_{1-4}$-Alkanol als ersten Alkohol und einen Monoalkylether eines Alkylenglycols, bevorzugter einen Mono-$C_{1-4}$-Alkylether eines $C_{2-4}$-Alkylenglycols als zweiten Alkohol.

Bevorzugt liegt das Gewichtsverhältnis des ersten Alkohols zum zweiten Alkohol im Bereich von 5 bis 0,01, bevorzugter im Bereich von 2 bis 0,2.

Bevorzugt enthält die Zusammensetzung auch Wasser. In einer bevorzugten Ausführungsform liegt das Wasser in einer Menge von 2 bis 15 Gew%, bezogen auf das Gesamtgewicht der Zusammensetzung, vor.

In einer bevorzugten Ausführungsform enthält die erfindungsgemäße Zusammensetzung außerdem einen Katalysator für die Epoxidpolymerisation.

Im Rahmen der vorliegenden Erfindung kann sowohl ein Katalysator für die Photopolymerisation als auch ein Katalysator für die thermische Polymerisation von Epoxiden verwendet werden. Beide Katalysatorgruppen sind dem Fachmann grundsätzlich bekannt.

In einer bevorzugten Ausführungsform enthält die Zusammensetzung einen Katalysator für die thermische Polymerisation von Epoxiden, jedoch keinen Katalysator für die Photopolymerisation von Epoxiden.

Als Katalysator für die thermische Polymerisation von Epoxiden kann im Rahmen der vorliegenden Erfindung grundsätzlich auf die dem Fachmann für diesen Zweck bekannten Verbindungen zurückgegriffen werden.

Bevorzugt umfasst der Katalysator eine Lewis-Säure.

Beispielhaft können als geeignete Katalysatoren für die thermische Polymerisation von Epoxiden Folgende angegeben werden: Metallacetylacetonate, Diamide, Imidazole, Amine und Ammoniumsalze, organische Sulfonsäuren und deren Aminsalze, Alkalimetallsalze von Carbonsäuren, Alkalimetallsalze, Fluoridsalze und Organozinnverbindungen sowie Metallalkoxide und Mischungen davon.

Bevorzugt liegt der Katalysator in einer Menge im Bereich von 0,01 Gew% bis 5 Gew%, bevorzugter im Bereich von 0,1 Gew% bis 3 Gew%, bezogen auf das Gesamtgewicht der Zusammensetzung, vor.

Als weitere optionale Komponenten der Zusammensetzung können z.B. oberflächenaktive Substanzen (z.B. zur Unterstützung der Filmbildung), UV-Absorber, Farbstoffe und/oder Stabilisatoren genannt werden.

Gemäß eines weiteren Aspekts der vorliegenden Erfindung wird ein Verfahren zur Beschichtung eines Substrats bereitgestellt, umfassend

- die Bereitstellung der oben beschriebenen erfindungsgemäßen Zusammensetzung,
- das Aufbringen der Zusammensetzung auf dem Substrat, und
- die Behandlung des Substrats bei einer Temperatur im Bereich von 75 °C bis 150°C zur Aushärtung der Beschichtung.

Hinsichtlich der bevorzugten Eigenschaften der Zusammensetzung kann auf die oben gemachten Ausführungen verwiesen werden.

Für das Beschichtungsverfahren kann es vorteilhaft sein, wenn die Silane der Formel (I) und/oder (II) zum Zeitpunkt des Aufbringens auf das Substrat bereits eine gewisse Vernetzung aufweisen. Eine definierte Vorkondensation kann z.B. durch eine mit Wasser oder einer wässrigen organischen oder Mineralsäure katalysierten Hydrolyse der Silane der Formel (I) und/oder (II) erreicht werden.

Das Aufbringen der Zusammensetzung auf dem Substrat kann mit üblichen, dem Fachmann bekannten Verfahren erfolgen.

Beispielhaft kann an dieser Stelle Tauchbeschichtung ("Dip Coating"), Schleuderbeschichtung ("Spin Coating"), Sprühbeschichtung, Fluten und Schlitzdüsenauftrag genannt werden.

Mit der Tauchbeschichtung kann die erfindungsgemäße Zusammensetzung auch auf Oberflächen von Substraten mit komplexerer Geometrie aufgebracht werden.

Im Rahmen der vorliegenden Erfindung können eine Vielzahl unterschiedlicher Substrate verwendet werden. Es können z.B. Kunststoffsubstrate oder auch Glassubstrate mit der erfindungsgemäßen Zusammensetzung beschichtet werden.

Ein geeignetes Kunststoffsubstrat kann z.B. einen oder mehrere der folgenden Kunststoffe aufweisen: Polycarbonat, Poly(methyl)methacrylat, Polyurethane, Polyamide, Polydiethylenglykol-bis-allyl carbonat (CR39), Polythiourethane wie z.B. MR-6, MR-7, MR-8, MR-10, MR-174.

Bei dem zu beschichtenden Substrat handelt es sich bevorzugt um solche, die in optischen Anwendungen eingesetzt werden.

Bevorzugt handelt es sich bei dem Substrat um eine Linse für die Anwendung als Kunststoffbrillenglas oder Lupe.

Bevorzugt erfolgt die thermische Behandlung des Substrats bei einer Temperatur im Bereich von 75 °C bis 150 °C, noch bevorzugter im Bereich von 90°C bis 130 °C. Gemäß eines weiteren Aspekts der vorliegenden Erfindung wird ein Artikel bereit gestellt, umfassend

- ein Substrat, und
- eine Beschichtung auf der Substratoberfläche, wobei die Beschichtung durch das oben beschriebene Verfahren erhältlich ist bzw. erhalten wird.

Bezüglich der Eigenschaften des Substrats und der Zusammensetzung, die auf das Substrat aufgebracht und anschließend unter Erhalt der Beschichtung vernetzt wird, kann auf die bereits oben gemachten Ausführungen verwiesen werden.

Gemäß eines weiteren Aspekts betrifft die vorliegende Erfindung die Verwendung der oben beschriebenen erfindungsgemäßen Zusammensetzung zur Beschichtung eines Substrats.

Hinsichtlich geeigneter und bevorzugter Substrate kann auf die bereits oben gemachten Ausführungen verwiesen werden.

## Beispiele

### Chemikalien

IPA-ST: $SiO_2$-Nano-Sol von Nissan Chemicals, Houston
FC4430: Flow-Agent der Firma 3M
Andere Chemikalien und Lösungsmittel: Aldrich

### Testmethodik

Test der Laugenbeständigkeit:

Beschichtete Gläser (-2,0 Dioptrien) wurden in einer alkalischen Lösung (pH>14) bei 50°C mit Ultraschall für 180 Sekunden behandelt. Schichtdicken vor und nach der Behandlung wurden an derselben Stelle optisch gemessen. Die Dicke der Hartschichten waren typischerweise 2,5μm Die Laugenbeständigkeit wird anschließend anhand des Schichtabbaus gemessen, wobei die Laugenbeständigkeit umso besser ist, je geringer der Schichtabbau ist.

Der Bayer-Test zur Bewertung der Kratzfestigkeit wurde mit einem COLTS Bayer-Testgerät und dem entsprechenden Verfahren gemessen.

Die Schichthaftung wurde über einen Gitterschnitt-Test durchgeführt.

**Hergestellte und getestete Zusammensetzungen**

BEISPIEL 1

36 Teile Resorcinol-bisglycidylether wurden in 162 Teile 2-Propanol und 264 Teile 1-Methoxy-2-propanol gelöst. Zu der Lösung wurden 186 Teile 3-Glycidoxypropyltrimethoxysilan, 150 Teile Tetraethoxysilan, 240 Teile IPA-ST und 126 Teile Wasser zugegeben und bei Raumtemperatur für 24 Stunden gerührt. Danach wurden 7,2 Teile Aluminiumacetylacetonat, 25,2 Teile Ammoniumperchlorat 1M Lösung, und 3,6 Teile FC4430 hinzugefügt und die Mischung für weitere 3 Stunden gerührt. Die resultierte Lösung wurde durch eine 5μm Filter filtriert und vor der Beschichtung im Kühlschrank gelagert.

BEISPIEL 2

36 Teile 1,4-Cyclohexandimehtanoldiglycidylether wurde in 162 Teile 2-Propanol und 264 Teile 1-Methoxy-2-propanol gelöst. Zu der Lösung wurden 186 Teile 3-Glycidoxypropyltrimethoxysilan, 150 Teile Tetraethoxysilan, 240 Teile IPA-ST und 126 Teile Wasser zugegeben und bei Raumtemperatur für 24 Stunden gerührt. Danach wurden 7,2 Teile Aluminiumacetylacetonat, 25,2 Teile Ammoniumperchlorat 1M Lösung, und 3,6 Teile FC4430 hinzugefügt und die Mischung für weitere 3 Stunden gerührt. Die resultierte Lösung wurde durch eine 5μm Filter filtriert und vor der Beschichtung vor der Beschichtung im Kühlschrank gelagert.

VERGLEICHSBEISPIEL 1

36 Teile Trimethylolpropantriglycidylether wurde in 162 Teile 2-Propanol und 264 Teile 1-Methoxy-2-propanol gelöst. Zu der Lösung wurden 186 Teile 3-Glycidoxypropyltrimethoxysilan, 150 Teile Tetraethoxysilan, 240 Teile IPA-ST und 126 Teile Wasser zugegeben und bei Raumtemperatur für 24 Stunden gerührt. Danach wurden 7,2 Teile Aluminiumacetylacetonat, 25,2 Teile 1M Ammoniumperchlorat-Lösung, und 3,6 Teile FC4430 hinzugefügt und die Mischung für weitere 3 Stunden gerührt. Die resultierte Lösung wurde durch einen 5μm-Filter filtriert und vor der Beschichtung im Kühlschrank gelagert.

VERGLEICHSBEISPIEL 2

36 Teile Pentaerythritoltetraglycidylether wurde in 162 Teile 2-Propanol und 264 Teile 1-Methoxy-2-propanol gelöst. Zu der Lösung wurden 186 Teile 3-Glycidoxypropyltrimethoxysilan, 150 Teile Tetraethoxysilan, 240 Teile IPA-ST und 126 Teile Wasser zugegeben und bei Raumtemperatur für 24 Stunden gerührt. Danach wurden 7,2 Teile Aluminiumacetylacetonat, 25,2 Teile 1M Ammoniumperchlorat-Lösung, und 3,6 Teile FC4430 hinzugefügt und die Mischung für weitere 3 Stunden gerührt. Die resultierte Lösung wurde durch einen 5μm-Filter filtriert und vor der Beschichtung im Kühlschrank gelagert.

VERGLEICHSBEISPIEL 3

186 Teile 3-Glycidoxypropyltrimethoxysilan, 186 Teile Tetraethoxysilan, und 240 Teile IPA-ST wurden in 162 Teile 2-Propanol, 264 Teile 1-Methoxy-2-propanol und 126 Teile Wasser gemischt und bei Raumtemperatur 24 Stunden gerührt. Danach wurden 7,2 Teile Aluminiumacetylacetonat, 25,2 Teile 1M Ammoniumperchlorat-Lösung, und 3,6 Teile FC4430 hinzugefügt und die Mischung für weitere 3 Stunden gerührt. Die resultierte Lösung wurde durch einen 5μm-Filter filtriert und vor der Beschichtung im Kühlschrank gelagert.

Die Testsubstrate wurden vor der Tauchbeschichtung mit einem wässrig-alkalischen Waschprozess aktiviert und nach der Beschichtung in einem Ofen bei 95°C 4 Stunden ausgehärtet.

Die mit diesen Zusammensetzungen erhaltenen Beschichtungen wurden hinsichtlich ihrer Laugenbeständigkeit (ermittelt über das Ausmaß des Schichtabbaus) und ihrer Kratzfestigkeit (Bayer-Test) untersucht. Die erhaltenen Ergebnisse werden in der Tabelle 1 gezeigt.

Tabelle 1: Schichttestergebnisse

| Lack | Epoxidverbindung mit mindestens zwei Epoxidgruppen | Schichtabbau [μm] | Bayer-Wert |
|---|---|---|---|
| Bsp. 1 | Resorcino ldiglycidylether | 0,2 | 6,1 |
| Bsp. 2 | 1,4-Cyclohexandimethanoldiglycidylether | 0,8 | 5,2 |
| Vgl.bsp. 1 | Trimethylolpropantriglycidylether | 0,6 | 4,7 |

(fortgesetzt)

| Lack | Epoxidverbindung mit mindestens zwei Epoxidgruppen | Schichtabbau [μm] | Bayer-Wert |
|---|---|---|---|
| Vgl.bsp. 2 | Pentaerythritoltetraglycidylether | trüb | trüb |
| Vgl.bsp. 3 | Nicht enthalten | Komplettabbau | 6,2 |

Die Ergebnisse zeigen, dass mit den erfindungsgemäßen Zusammensetzungen eine Beschichtung mit hoher Laugenbeständigkeit und sehr guter Kratzfestigkeit erhalten wird.

Anhand der folgenden Beispiele wurde die Rissbildung und Haftung der erfindungsgemäßen Beschichtungen auf verschiedenen Substraten getestet.

BEISPIEL 3

36 Teile Resorcinolbisglycidylether wurde in 160 Teile 2-Propanol und 265 Teile 1-Methoxy-2-propanol gelöst. Zu der Lösung wurden 240 Teile 3-Glycidoxypropyltrimethoxysilan, 122 Teile Tetraethoxysilan, 216 Teile IPA-ST und 126 Teile Wasser zugegeben und bei Raumtemperatur für 24 Stunden gerührt. Danach wurden 6 Teile Aluminiumacetylacetonat, 25,2 Teile 1M Ammoniumperchlorat-Lösung, und 3,6 Teile FC4430 hinzugefügt und die Mischung für weitere 3 Stunden gerührt. Die resultierte Lösung wurde durch einen 5μm-Filter filtriert und vor der Beschichtung im Kühlschrank gelagert.

BEISPIEL 4

69 Teile Resorcinolbisglycidylether wurde in 160 Teile 2-Propanol und 265 Teile 1-Methoxy-2-propanol gelöst. Zu der Lösung wurden 227 Teile 3-Glycidoxypropyltrimethoxysilan, 102 Teile Tetraethoxysilan, 216 Teile IPA-ST und 126 Teile Wasser zugegeben und bei Raumtemperatur für 24 Stunden gerührt. Danach wurden 6 Teile Aluminiumacetylacetonat, 25,2 Teile 1M Ammoniumperchlorat-Lösung, und 3,6 Teile FC4430 hinzugefügt und die Mischung für weitere 3 Stunden gerührt. Die resultierte Lösung wurde durch einen 5μm-Filter filtriert und vor der Beschichtung im Kühlschrank gelagert.

Die aus diesen Zusammensetzungen erhaltenen Beschichtungen wurden hinsichtlich ihrer Primärhaftung und ihrer Rissbeständigkeit getestet. Die erhaltenen Ergebnisse werden in Tabelle 2 gezeigt.

Tabelle 2: Haftungs- und Rissbildungseigenschaften

| Lack | Multiepoxy | Primärhaftung | | | Rissbildung | Schichtabbau [μm] |
|---|---|---|---|---|---|---|
| | | CR39 | MR7 | MR8 | | |
| Bsp. 3 | 3% Resorcinoldiglycidyl ether | Keine Ablösung | Keine Ablösung | Keine Ablösung | Keine Risse | 0,0 |
| Bsp. 4 | 6% Resorcinoldiglycidyl ether | Keine Ablösung | Keine Ablösung | Keine Ablösung | Keine Risse | 0,0 |

Diese Beispiele belegen, dass mit den erfindungsgemäßen Zusammensetzungen Beschichtungen erhalten werden, die eine sehr gute Substrathaftung aufweisen und gleichzeitig eine sehr gute Laugenbeständigkeit (kein Schichtabbau) und Rissbeständigkeit besitzen.

## Patentansprüche

**1.** Eine Zusammensetzung für die Herstellung einer Beschichtung, umfassend

(a) ein Silanderivat der Formel (I)

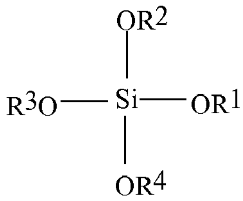

(I)

worin

$R^1$, $R^2$, $R^3$ und $R^4$, die gleich oder unterschiedlich sein können, ausgewählt werden aus Alkyl, Acyl, Alkylenacyl, Cycloalkyl, Aryl oder Alkylenaryl, die gegebenenfalls substituiert sein können,

und/oder ein Hydrolyse- und/oder Kondensationsprodukt des Silanderivats der Formel (I),
(b) ein Silanderivat der Formel (II)

$R^6R^7_{3-n}Si(OR^5)_n$ (II)

worin

$R^5$ eine unsubstituierte oder substituierte Alkyl-, Acyl-, Alkylenacyl-, Cycloalkyl-, Aryl- oder Alkylenarylgruppe ist,
$R^6$ ein organischer Rest ist, der eine Epoxidgruppe enthält,
$R^7$ eine unsubstituierte oder substituierte Alkyl-, Cycloalkyl-, Aryl- oder Alkylenarylgruppe ist,
n 2 oder 3 ist,

und/oder ein Hydrolyse- und/oder Kondensationsprodukt des Silanderivats der Formel (II),
(c) ein kolloidales anorganisches Oxid, Fluorid oder Oxyfluorid,
(d) eine cycloaliphatische oder aromatische Epoxidverbindung, die mindestens zwei Epoxidgruppen aufweist,
(e) ein Lösungsmittel, das einen Alkohol, Ether und/oder Ester enthält.

**2.** Die Zusammensetzung nach Anspruch 1, wobei das Silanderivat der Formel (I) und/oder die Hydrolyse- und/oder Kondensationsprodukte des Silanderivats der Formel (I) in der Zusammensetzung in einer Menge von 1 Gew% bis 35 Gew% vorliegt bzw. vorliegen.

**3.** Die Zusammensetzung nach Anspruch 1 oder 2, wobei der Rest $R^6$ in dem Silanderivat der Formel (II) die folgende Formel (III) aufweist:

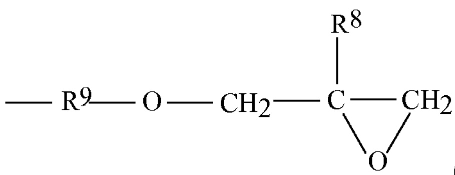

(III)

worin

$R^8$ Wasserstoff oder $C_{1-4}$-Alkyl ist und
$R^9$ $C_{1-10}$-Alkylen ist;

**4.** Die Zusammensetzung nach einem der vorstehenden Ansprüche, wobei das Silanderivat der Formel (II) und/oder die Hydrolyse- und/oder Kondensationsprodukte des Silanderivats der Formel (II) in der Zusammensetzung in einer Menge von 1 Gew% bis 35 Gew% vorliegt bzw. vorliegen.

**5.** Die Zusammensetzung nach einem der vorstehenden Ansprüche, wobei das Gewichtsverhältnis des Silanderivats der Formel (I) und/oder dessen Hydrolyse- und/oder Kondensationsprodukte zu dem Silanderivat der Formel (II)

und/oder dessen Hydrolyse- und/oder Kondensationsprodukte im Bereich von 95/5 bis 5/95.

**6.** Die Zusammensetzung nach einem der vorstehenden Ansprüche, wobei das anorganische Oxid aus $SiO_2$, $TiO_2$, $ZrO_2$, $SnO_2$, $Sb_2O_3$, $A1_2O_3$, AlO(OH) oder Mischoxiden oder Gemischen oder Core-Shell-Strukturen davon ausgewählt wird, und/oder das anorganische Fluorid $MgF_2$ ist, das optional in Core-Shell-Struktur mit dem anorganischen Oxid vorliegt.

**7.** Die Zusammensetzung nach einem der vorstehenden Ansprüche, wobei das kolloidale anorganische Oxid, Fluorid oder Oxyfluorid in einer Menge von 1 Gew% bis 25 Gew%, bezogen auf das Gesamtgewicht der Zusammensetzung, vorliegt.

**8.** Die Zusammensetzung nach einem der vorstehenden Ansprüche, wobei die cycloaliphatische oder aromatische Epoxidverbindung mindestens zwei Substituenten aufweist, die gleich oder unterschiedlich sein können, und durch folgende Formel dargestellt werden:

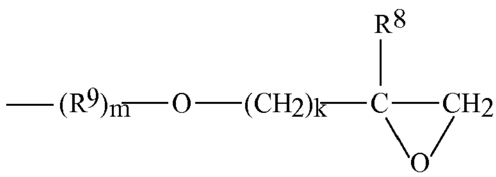

worin

$R^8$ Wasserstoff oder $C_{1-4}$-Alkyl ist,
$R^9$ eine unsubstituierte oder substituierte $C_{1-10}$-Alkylen-Gruppe, bevorzugter eine unsubstituierte oder substituierte $C_{1-4}$-Alkylen-Gruppe ist;
k 1-4 ist;
und m 0 oder 1 ist.

**9.** Die Zusammensetzung nach einem der vorstehenden Ansprüche, wobei die mindestens zwei Epoxidgruppen aufweisende cycloaliphatische oder aromatische Verbindung in einer Menge von 0,1 Gew% bis 20 Gew%, bezogen auf das Gesamtgewicht der Zusammensetzung, vorliegt.

**10.** Die Zusammensetzung nach einem der vorstehenden Ansprüche, wobei das Lösungsmittel einen Alkohol enthält, der aus einem $C_{1-6}$-Alkanol, bevorzugter einem $C_{1-4}$-Alkanol, einem Mono-$C_{1-4}$-Alkylether eines $C_{2-4}$-Alkylenglycols, oder einem Gemisch davon ausgewählt wird.

**11.** Die Zusammensetzung nach einem der vorstehenden Ansprüche, wobei das Lösungsmittel einen Ether, der aus einem Dialkylether, cycloaliphatischen Ether, Arylether oder Alkylarylether ausgewählt wird, und/oder einen Ester, der aus einem Alkylester, Cycloalkylester, Arylalkylester oder Alkylenglycolester ausgewählt wird, enthält.

**12.** Die Zusammensetzung nach einem der vorstehenden Ansprüche, wobei das Lösungsmittel einen ersten Alkohol, Ether oder Ester mit einem Siedepunkt S 1 und einen zweiten Alkohol, Ether oder Ester mit einem Siedepunkt S2 enthält, wobei sich der Siedepunkt S1 und der Siedepunkt S2 so unterscheiden, dass entweder

$$S1/S2 \geq 1{,}2$$

oder

$$S1/S2 \leq 0{,}8.$$

**13.** Die Zusammensetzung nach einem der vorstehenden Ansprüche, weiterhin enthaltend einen Katalysator für die

thermische Polymerisation von Epoxiden.

**14.** Ein Verfahren zur Beschichtung eines Substrats, umfassend

- die Bereitstellung der Zusammensetzung gemäß einem der Ansprüche 1-13,
- das Aufbringen der Zusammensetzung auf dem Substrat, und
- die Behandlung des Substrats bei einer Temperatur im Bereich von 75°C bis 150°C zur Aushärtung der Beschichtung.

**15.** Ein Artikel, umfassend

- ein Substrat, und
- eine Beschichtung auf der Substratoberfläche, wobei die Beschichtung durch das Verfahren gemäß Anspruch 14 erhältlich ist bzw. erhalten wird.

Europäisches Patentamt
European Patent Office
Office européen des brevets

# EUROPÄISCHER RECHERCHENBERICHT

Nummer der Anmeldung
EP 11 16 4494

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 198 57 317 A1 (INST NEUE MAT GEMEIN GMBH [DE]; BSH BOSCH SIEMENS HAUSGERAETE [DE]) 15. Juni 2000 (2000-06-15)<br>* Seite 2, Zeile 24 - Seite 5, Zeile 61 *<br>* Beispiel 2 *<br>----- | 1-15 | INV.<br>C09D183/06 |

RECHERCHIERTE SACHGEBIETE (IPC)
C09D

Der vorliegende Recherchenbericht wurde für alle Patentansprüche erstellt

1

| Recherchenort | Abschlußdatum der Recherche | Prüfer |
|---|---|---|
| Den Haag | 21. Juli 2011 | Stinchcombe, John |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
&. : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 11 16 4494

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

21-07-2011

| Im Recherchenbericht angeführtes Patentdokument | Datum der Veröffentlichung | Mitglied(er) der Patentfamilie | Datum der Veröffentlichung |
|---|---|---|---|
| DE 19857317 A1 | 15-06-2000 | AT 242300 T | 15-06-2003 |
| | | AU 1976800 A | 03-07-2000 |
| | | WO 0036034 A1 | 22-06-2000 |
| | | EP 1137729 A1 | 04-10-2001 |
| | | ES 2200584 T3 | 01-03-2004 |
| | | US 6537672 B1 | 25-03-2003 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 3986997 A
- US 20010049023 A1
- US 4355135 A
- US 5322888 A
- WO 2008087741 A